# FASCICULE DE BREVET EUROPEEN

(11) **EP 1 337 753 B1**
(45) Date de publication et mention de la délivrance du brevet: **26.07.2006**
(21) Numéro de dépôt: 01997640.6
(22) Date de dépôt: 26.11.2001
(51) Int. Cl.: F03B 3/12, F03B 1/02

(54) **PROCEDE DE FABRICATION D'UN COMPOSANT DE TURBINE HYDRAULIQUE**
VERFAHREN ZUR HERSTELLUNG EINES HYDRAULISCHEN TURBINENBAUTEILS
METHOD FOR MAKING A HYDRAULIC TURBINE COMPONENT

(30) Priorité: 27.11.2000 FR 0015288
(43) Date de publication de la demande: 27.08.2003
(73) Titulaire: ALSTOM Power N.V., 1101 CS Amsterdam (NL)
(72) Inventeur: ROMAN, Jean-Marie, Auguste, F-38130 Echirolles (FR); BLOIS, Christophe, Jean-Philippe, F-33000 Bordeaux (FR); ROSSI, Georges-Auguste, F-38330 Saint Ismier (FR); LOWYS, Pierre-Yves, Olivier, F-42400 Saint Chamond (FR)
(74) Mandataire: Myon, Gérard Jean-Pierre
(86) Numéro de dépôt international: PCT/FR2001/003732
(87) Numéro de publication internationale: WO 2002/042638

(56) Documents cités:
- CH-A- 216 126
- DE-A- 4 443 440
- FR-A- 2 052 248
- FR-A- 2 599 081
- FR-A- 2 776 341
- GB-A- 583 291
- GB-A- 652 315
- US-A- 4 664 600
- US-A- 5 295 789
- PATENT ABSTRACTS OF JAPAN vol. 008, no. 096 (M-294), 4 mai 1984 (1984-05-04) & JP 59 012171 A (FUJI DENKI SEIZO KK), 21 janvier 1984 (1984-01-21)
- GREIN H ET AL: "DIE MODELLIERUNG DREIDIMENSIONALER FLACHEN, EIN WERKZEUG FUR ENTWICKLUNG UND FERTIGUNG HYDRAULISCHER MASCHINEN" REVUE TECHNIQUE SULZER,CH,SULZER FRERES S.A. WINTERTHUR, vol. 71, no. 2, 1989, pages 27-34, XP000026332

## Description

L'invention a trait à un composant hydraulique et à un procédé de fabrication d'un tel composant.

Par composant hydraulique, on entend tout organe susceptible d'interagir avec un écoulement d'eau et, par exemple, un auget de turbine de type Pelton, une directrice pour un écoulement, une pale de turbine de type Kaplan ou une roue de turbine de type Francis.

Il est connu, par exemple de WO-A-99/49213 ou de EP-A-0 902 183 de réaliser les augets d'une roue de turbine Pelton en matériaux composites. Cependant, la définition de ces augets est délicate à mettre en oeuvre et il est nécessaire de procéder par itérations en réalisant des prototypes successifs, afin de définir une géométrie satisfaisante pour ces augets.

En effet, il n'est pas possible d'utiliser efficacement une méthode de calcul, par exemple par éléments finis, fondée sur l'analyse d'un matériau isotrope tel que le métal, ce qui est classiquement réalisé pour les augets métalliques. Dans le cas d'un auget en matériaux composites, la structure du matériau est anisotrope et la méthode précitée ne peut pas être utilisée efficacement, d'où des tâtonnements qui allongent et renchérissent la mise au point de ces augets.

Des problèmes analogues se posent pour d'autres composants hydrauliques qui doivent également être modélisés en vue de leur définition avant fabrication.

C'est à ces inconvénients qu'entend plus particulièrement remédier l'invention en proposant une nouvelle structure pour un composant hydraulique qui permet une définition fiable et précise de ces éléments constitutifs et, par la même, une modélisation efficace. Ceci induit un gain de temps non négligeable lors de la mise au point de ce composant et évite d'avoir un recours systématique à des prototypes onéreux.

Dans cet esprit, l'invention concerne un composant hydraulique comprenant au moins une surface destinée à interagir avec un écoulement d'eau, ladite surface étant obtenue par moulage de matériaux composites, caractérisé en ce que ledit composant comprend deux peaux constituant respectivement l'intrados et l'extrados dudit composant, réalisées par moulage de matériaux composites et définissant entre elles un volume interne dans lequel sont disposées des nervures de rigidification, dont certaines au moins relient lesdites deux peaux.

Grâce à l'invention, un calcul précis du comportement dynamique de chaque élément du composant peut être effectué. En particulier, les deux peaux constituant respectivement l'intrados et l'extrados du composant peuvent être modélisées comme des surfaces, l'emplacement et la géométrie des nervures de rigidification étant alors déterminés pour renforcer les parties du composant les plus sollicitées sur le plan mécanique.

Selon des aspects avantageux de l'invention, le composant incorpore une ou plusieurs des caractéristiques suivantes :
- Le volume interne aux surfaces précitées est rempli de mousse synthétique et/ou d'une structure en nid d'abeilles entre les nervures précitées. Un tel remplissage augmente la rigidité et la stabilité dimensionnelle du composant.
- L'une au moins des peaux formant l'intrados ou l'extrados est revêtue localement d'une protection contre l'usure ou les chocs. Cette protection peut être formée par au moins un insert métallique intégré dans ou apposé sur la peau. Cette protection peut également être formée par un dépôt électrolytique à base de métal, la peau étant formée, dans la zone de ce dépôt, à partir d'un tissu ou d'un mat dont certains fils ou fibres sont chargés en métal ou métalliques.
- Certaines au moins des nervures sont monobloc avec l'une des peaux. Cette caractéristique facilite l'assemblage du composant, qui comprend essentiellement deux peaux, sans qu'il soit nécessaire de prévoir un positionnement précis des nervures lors de l'assemblage.

Selon un premier mode de réalisation avantageux de l'invention, le composant comprend essentiellement une structure en matériaux composites, incluant les peaux précitées.

Selon un autre mode de réalisation avantageux de l'invention, le composant comprend une structure métallique sur laquelle est rapportée une structure en matériau composite incluant au moins les deux peaux.

L'invention concerne des types particuliers de composant et, plus spécifiquement un auget de roue de turbine de type Pelton dans lequel les deux peaux définissent entre elles un volume de réception d'une saillie d'une jante de la turbine. Une turbine Pelton conforme à l' invention a une jante dont les saillies ont des faces globalement parallèles deux à deux. Dans ce cas, un intervalle est avantageusement prévu entre une surface d'une saillie de la jante et une surface en regard d'une des peaux précitées, cet intervalle étant soit comblé par un matériau de remplissage, notamment une mousse synthétique ou une structure en nid d'abeilles, soit laissé libre.

L'invention a également trait à une pale de turbine Kaplan qui comprend un plateau de raccordement sur un moyeu et un voile. Dans ce cas, les nervures de rigidification comprennent au moins une nervure globalement circonférentielle par rapport à l'axe de rotation du moyeu. On peut en outre prévoir que le voile de la pale a une âme métallique à travers laquelle s'étendent une ou des nervures. Des moyens d'immobilisation des deux peaux du voile, par rapport au plateau ou à un tourillon appartenant au plateau, peuvent être prévus. Selon des modes de réalisation, ces moyens comprennent une frette, disposée autour du moyeu et des peaux précitées, ou un organe de blocage des bords de ces peaux, dans une position où ils coiffent une collerette du moyeu.

L'invention a également trait à un procédé de fabrication d'un composant hydraulique tel que précédemment décrit et, plus spécifiquement, à un procédé au cours duquel une partie au moins du composant est réalisée en matériaux composites. Ce procédé comprend des étapes consistant à :
- déterminer par le calcul la géométrie et la composition de l'intrados et de l'extrados du composant, ainsi que celle de nervures de rigidification ;
- mouler une peau destinée à former l'intrados ;
- mouler une peau destinée à former l'extrados ;
- mouler au moins une nervure de rigidification, éventuellement en même temps que le moulage d'une des peaux et
- assembler le composant en disposant la nervure dans un volume interne du composant défini entre les peaux.

Le procédé de l'invention permet une optimisation de la fabrication des composants hydrauliques et une bonne reproductibilité de leurs propriétés mécaniques. La composition déterminée résulte du choix des matériaux utilisés. Ces peaux et cette nervure sont avantageusement moulées dans une même étape.

Selon un premier aspect avantageux de l'invention, on garnit ce volume d'un matériau de remplissage, du genre mousse et/ou structure en nids d'abeilles.

Selon un autre aspect avantageux de l'invention, le procédé consiste à mouler les peaux et la nervure à partir d'un mat de fibres pré-imprégnées de résine.

Selon un autre aspect avantageux, le procédé consiste à utiliser, pour les couches externes des peaux et dans certaines zones au moins du composant, des fibres métalliques ou chargées en métal compatibles avec un dépôt électrolytique ultérieur dans les zones considérées.

L'invention sera mieux comprise et d'autres avantages de celle-ci apparaîtront plus clairement à la lumière de la description qui va suivre de cinq modes de réalisation d'un composant hydraulique conforme à son principe et de son procédé de fabrication, donnée uniquement à titre d'exemple et faite en référence aux dessins annexés dans lesquels :
- la figure 1 est une vue en perspective éclatée d'un auget de roue de turbine Pelton conforme à l'invention, avec une vue partielle de la jante de la roue ;
- la figure 2 est une coupe transversale de l'auget de la figure 1 une fois assemblé ;
- la figure 3 est une demi-coupe partielle de principe de la zone d'attache d'une roue de turbine Pelton équipée d'un auget du type de celui des figures 1 et 2 ;
- la figure 4 est une coupe partielle analogue à la partie gauche de la figure 2 pour un auget conforme à un second mode de réalisation de l'invention ;
- la figure 5 est une coupe partielle analogue à la partie droite de la figure 2 pour un auget conforme à un troisième mode de réalisation de l'invention ;

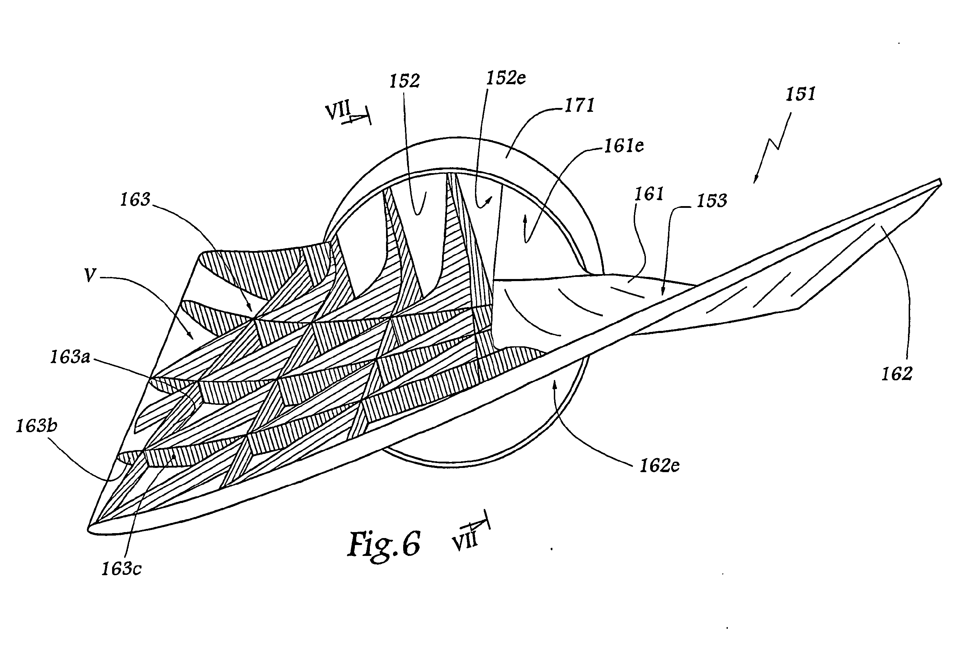

- la figure 6 est une vue en perspective avec arrachement partiel d'une pale de turbine Kaplan conforme à l'invention.
- la figure 7 est une coupe dans le plan VII-VII à la figure 6 et
- la figure 8 est une vue analogue à la figure 7, pour une pale de turbine Kaplan conforme à un autre mode de réalisation de l'invention.

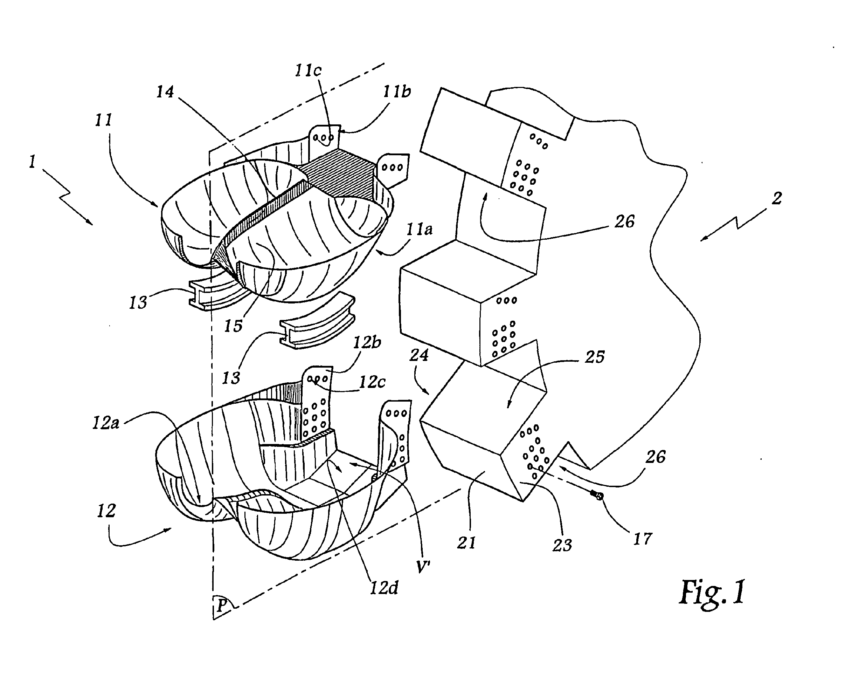

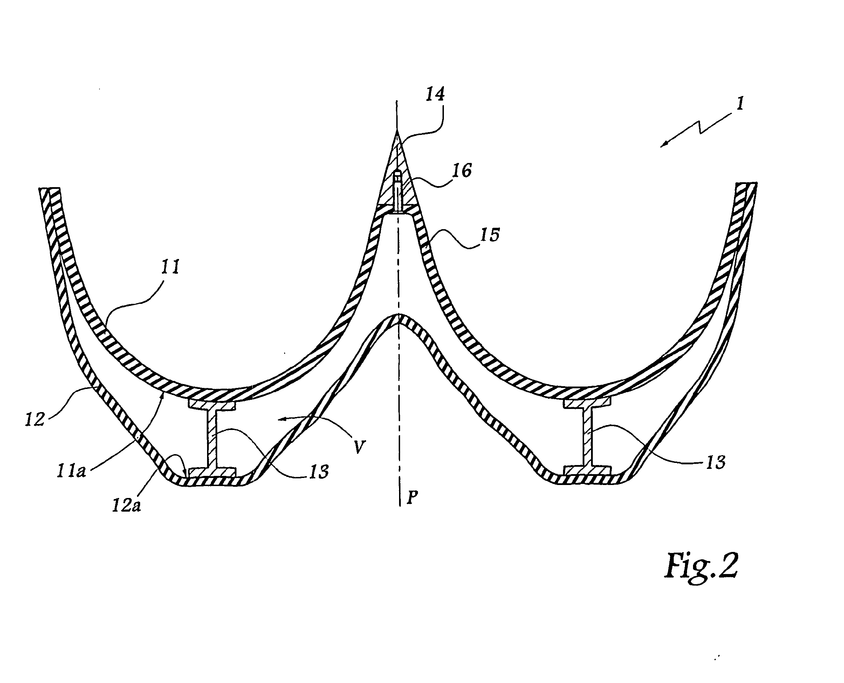

L'auget 1 représenté aux figures 1 et 2 est destiné à être monté sur la jante 2 d'une roue de turbine Pelton, cette jante étant équipée de saillies radiales 21 comprenant des faces 23 et 24 perpendiculaires à l'axe central de la jante 2 et des faces 25 et 26 orientées respectivement vers des saillies voisines. Les faces 23 et 24 sont parallèles entre elles et les faces 25 et 26 sont parallèles entre elles.

L'auget 1 est constitué d'une première peau 11 formant son intrados et d'une seconde peau 12 formant son extrados, ces peaux étant réalisées par empilage de couches en matériaux composites formés de fibres de renfort en carbone, en verre ou en aramide se présentant sous la forme d'un tissu, d'une nappe, d'un ruban, d'un mat ou de fibres courtes et pré-imprégnées de résine thermoplastique ou thermodurcissable à base de polyester, d'expoxy, de poly-éther-éther-cétone, de vinylester, de polyvinyl, de polyamide, d'uréthane, etc ...

Selon une variante, un mat ou un tissu peut être formé de fibres sèches, ce mat ou ce tissu étant introduit dans un moule dans lequel est injectée sous pression la résine destinée à former, avec le mât ou le tissu, l'une des peaux 11 et 12.

D'autres techniques de moulage peuvent être mises en oeuvre, telles que la mise en place d'une préforme fibreuse, constituée préalablement dans un outillage spécifique avec une liaison inter-couches, ou l'injection simultanée de résine et de fibres courtes.

La géométrie des peaux 11 et 12 et le positionnement des fibres de renfort dans ces peaux peuvent être prédéterminés par le calcul, de façon précise, nonobstant l'épaisseur finale de l'auget 1 une fois celui-ci assemblé.

Une fois assemblées entre elles, les peaux 11 et 12 forment une structure en caisson et définissent entre elles un volume V à l'intérieur duquel sont disposées des nervures de rigidification 13 à section transversale globalement en forme de I ainsi que cela ressort des figures 1 et 2. Une fois assemblé, comme représenté à la figure 2, l'auget 1 est rigide et peut supporter sans dommage des efforts mécaniques intenses, tels qu'il en existe au niveau d'une roue de turbine Pelton.

Les peaux 11 et 12 reprennent les efforts de traction/compression subis par l'auget, voire les efforts de flexion résultant de l'écoulement d'eau. Les nervures de rigidification reprennent des efforts de compression et de cisaillement transmis par les peaux.

Les nervures 13 sont également réalisées par moulage de matériaux composites. Elles peuvent être monolithiques ou constituées par une juxtaposition de couches, ou "sandwich", du type stratifié composite structurel / mousse synthétique /stratifié composite structurel. Cependant, elles pourraient également être réalisées en métal ou en alliage métallique.

Les nervures 13 sont représentées sur les figures comme parallèles au plan médian P de l'auget 1. Cependant, d'autres nervures pourraient, le cas échéant, être disposées selon une direction globalement perpendiculaire à ce plan.

Un insert métallique 14 est disposé sur l'arête médiane 15 de l'auget formé par la peau 11. Cet insert 14 est fixé sur la peau 11 par des vis dont une seule apparaît à la figure 2, avec la référence 16. L'insert 14 peut également être collé sur la peau 11 ou fixé par tout autre moyen, par exemple riveté.

Bien entendu, plusieurs inserts du type de l'insert 14 peuvent être utilisés sur les différents bords d'attaque de l'auget.

Les nervures 13 sont avantageusement collées contre les surfaces internes 11a et 12a des peaux 11 et 12 qui définissent le volume V.

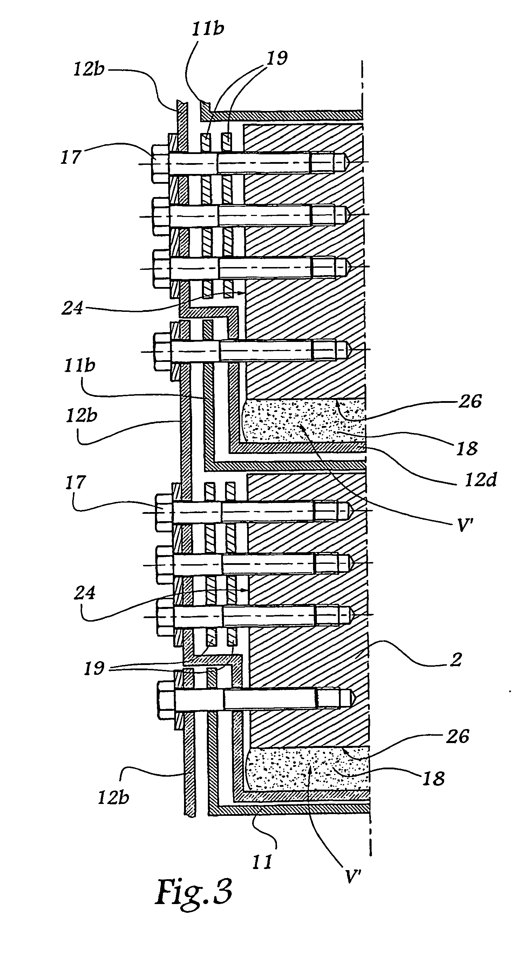

Les peaux 11 et 12 ont des joues 11b et 12b dans lesquelles sont percés des orifices 11c, respectivement 12c, de passage de vis de fixation 17 de l'auget 1 sur la saillie 21 et des augets équivalents sur les autres saillies de la jante 2, ainsi que cela ressort de la figure 3. La géométrie des peaux 11 et 12 de l'auget 1 et de la saillie 21 est telle que les joues 11b et 12b sont prévues pour venir en appui contre les surfaces 23 et 24 sur lesquelles elles peuvent être collées, en plus de la fixation mécanique grâce aux vis 17. Un volume V' est défini entre la surface 26 de chaque saillie 21 et une surface 12d de la peau 12 reliant les joues 12b en partie inférieure de la peau 12. Ce volume V' est avantageusement rempli d'une mousse 18 assurant un positionnement efficace de l'auget 1 par rapport à la saillie 21. En variante, le volume V' peut être laissé vide.

Des cales 19 sont interposées entre les joues 12b et les surfaces 23 et 24 afin de compenser la différence entre la distance entre les joues 12b et la largeur des saillies 21, cette différence de largeur permettant l'engagement de la peau 11 dans la peau 12 au niveau où les joues 11b et 12b viennent en recouvrement et sont traversées par une ou plusieurs vis 17.

A la figure 3, la turbine est représentée avant serrage des vis 17 pour la clarté du dessin.

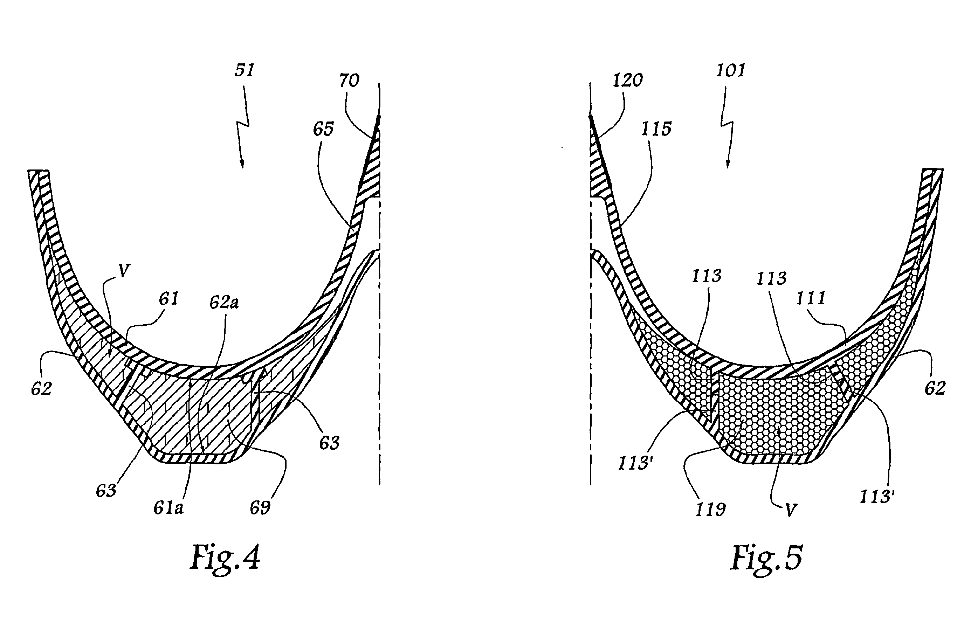

Dans le second mode de réalisation de l'invention représenté à la figure 4, les éléments analogues à ceux du premier mode de réalisation portent des références identiques augmentées de 50. Dans ce mode de réalisation, l'auget 51 comprend une peau d'intrados 61 et une peau d'extrados 62 définissant entre elles un volume interne V. Dans ce volume V, des nervures 63 servent à la rigidification de l'auget 51, tout comme les nervures 13 du premier mode de réalisation.

Ces nervures 63 sont monobloc avec la peau d'extrados 62 et viennent en appui contre la surface intérieure 61a de la peau 61.

Bien entendu, les nervures 63 pourraient être prévues monobloc avec la peau 61 et s'étendre en direction de la peau 62.

Le volume V est rempli d'une masse 69 de mousse organique contribuant également à l'augmentation de la stabilité dimensionnelle de l'auget 51 et de sa rigidité en flexion.

Dans sa partie formant l'arête médiane 65 de l'auget 51, la peau 61 est recouverte d'un revêtement électrolytique 70 visant à protéger la peau 61. Un tel dépôt peut être prévu sur tous les bords d'attaque de l'auget.

Pour permettre un accrochage efficace de ce revêtement 70 sur la peau 61, on prévoit que certaines au moins des fibres de renfort de la peau 61 dans la zone de l'arête médiane 65 et d'autres bords d'attaque sont des fibres métalliques, ce qui permet un accrochage intime du dépôt 70 sur ces fibres et évite le décollement du revêtement.

Dans le troisième mode de réalisation de l'invention représenté à la figure 5, les éléments analogues à ceux du premier mode de réalisation porte des références augmentées de 100. L'auget 101 de ce mode de réalisation est formé par une peau d'intrados 111 et une peau d'extrados 112 définissant entre elles un volume V dans lequel sont disposées des nervures 113 et 113' monobloc respectivement avec la peau 111 et avec la peau 112. Ces nervures viennent en appui les unes contre les autres et permettent de rigidifier l'auget 101. Le volume V est rempli d'une structure en nids d'abeilles 119 contribuant également à l'augmentation de la rigidité de l'auget 101. Comme précédemment, un revêtement 120 de protection est prévu sur l'arête médiane 115 formée par la peau 111 et, éventuellement, sur les autres bords d'attaque.

Le quatrième mode de réalisation de l'invention concerne une pale 151 de turbine Kaplan qui comprend un plateau 152 d'accouplement sur un moyeu de la turbine et un voile 153 destiné à être baigné par le flux du liquide entraînant la turbine.

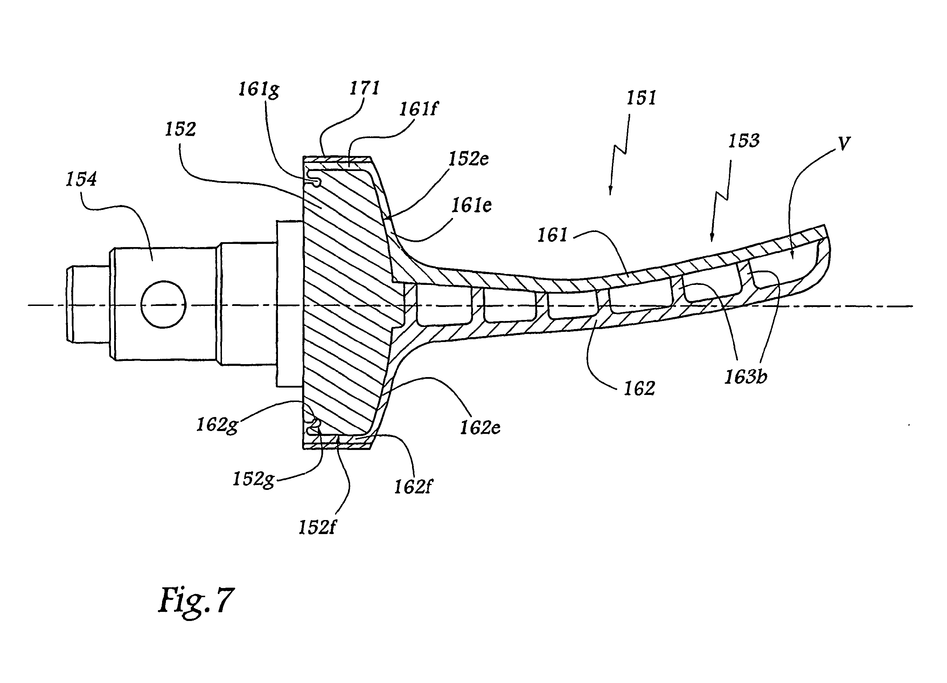

Comme il ressort plus particulièrement de la figure 7, le plateau 152 se prolonge par un axe 154 de montage sur le moyeu de la turbine.

Le voile 153 est formé d'une peau d'intrados 161 et d'une peau d'extrados 162 définissant entre elles un volume V dans lequel sont disposées des nervures 163 de rigidification du voile 153. Ces nervures sont monobloc avec la peau 162 et sont de trois types. Des nervures radiales 163a s'étendent à partir du plateau 152 selon des directions globalement radiales par rapport à l'axe de rotation de la turbine lorsque la pale 151 est montée sur le moyeu. Des nervures circonférentielles 163b sont conformées en étant globalement perpendiculaire aux nervures radiales 163a. Enfin, des nervures transversales 163c s' étendent dans le volume V en étant obliques par rapport aux nervures 163a et 163c. En pratique, les nervures transversales 163c s'étendent selon des diagonales de caissons élémentaires définis entre deux nervures radiales 163a et deux nervures circonférentielles 163b.

Les nervures 163 pourraient être distinctes de la peau 162, comme les nervures 13 sont distinctes des peaux 11 et 12 du premier mode de réalisation.

Comme il ressort plus particulièrement de la figure 7, les peaux 161 et 162 se prolongent par des parties 161e et 162e qui viennent en appui contre la surface extérieure 152e du plateau 152. Ces parties se prolongent respectivement par des jupes 161f, 162f destinées à entourer la surface radiale externe 152f du plateau 152, ces jupes étant pourvues d'un rebord 161g, 162g destiné à être engagé dans une gorge 152g prévue sur la surface interne du plateau 152.

Une frette 171 est disposée autour des jupes 161f et 162f de façon à maintenir efficacement les peaux 161 et 162 par rapport au plateau 152.

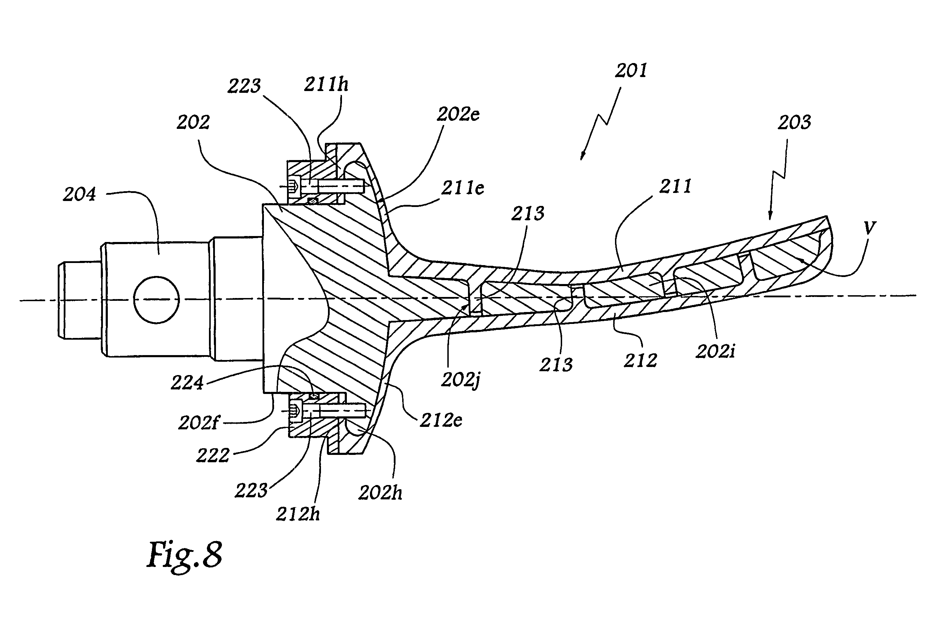

Dans le cinquième mode de réalisation de l'invention représenté à la figure 8, les éléments analogues à ceux du quatrième mode de réalisation portent des références identiques augmentées de 50. La pale 201 de turbine Kaplan conforme à ce mode de réalisation comprend un plateau 202 dont on note 202e la surface extérieure et 202h une collerette radiale externe. Cette pale comprend également un voile 203 dont les surfaces destinées à interagir avec l'écoulement d'entraînement de la turbine sont formées par une peau d'intrados 211 et une peau d'extrados 212 définissant entre elles un volume V dans lequel sont disposées des nervures 213 qui s'étendent alternativement à partir de la peau 211 ou de la peau 212.

Ce mode de réalisation diffère du précédent en ce que le plateau 202 se prolonge par une armature 202i dans laquelle sont ménagés des perçages 202i de passage des nervures 213, l'armature 202i remplissant, pour l'essentiel, le volume V. En ce sens, le voile 203 de la pale 201 comprend une structure métallique, à savoir l'armature 202i sur laquelle est rapportée la structure en matériau composite formée des peaux 211 et 212. Bien entendu, les dimensions et les positions des perçages 202i sont définis pour ne pas fragiliser l'armature 202i de façon trop importante.

Les peaux 211 et 212 se prolongent par des parties 211e et 212e recouvrant la surface 202e et se terminant par des bords 211h et 212h destinés à recouvrir la collerette 202h. Les bords 211h et 212h sont maintenus en place par un anneau 222 destiné à être disposé autour de la surface radiale 202f du plateau 202. Des vis 223 sont réparties autour de l'axe 204 du plateau 202, ces vis permettant de serrer l'anneau 222 sur la collerette 202h et d'immobiliser ainsi les bords 211h et 212h des peaux 211 et 212. Un joint torique 224 est disposé dans l'anneau 222, qui est réalisé en acier inox, au contact de la surface 202f.

L'invention a été représentée en référence à un auget de turbine Petlon et à une pale de turbine Kaplan. Elle est cependant applicable à d'autres types de composants hydrauliques et, par exemple, à une directrice qui comprend un tourillon et un voile s'étendant à partir de ce tourillon. Dans ce cas, les nervures de rigidification peuvent être parallèles et/ou perpendiculaires au tourillon, voire également obliques par rapport à ce tourillon. L'invention peut également être appliquée à une roue de turbine de type Francis, dans laquelle les aubes peuvent être formées d'une peau intrados et d'une peau extrados entre lesquelles sont disposées des nervures de rigidification. De même, le plafond et/ou la ceinture d'une roue de turbine Francis peuvent être formés d'une peau intrados et d'une peau extrados rigidifiées par des nervures. On peut également envisager de réaliser des éléments de pivoterie, tels que des leviers de directrice ou de mécanisme de roue Kaplan, conformément à l'invention.

Quel que soit le mode de réalisation considéré, le volume intérieur défini entre la peau d'intrados et la peau d'extrados peut être ou non garni d'un matériau de remplissage, tel qu'une mousse ou une structure en nids d'abeilles.

## Revendications

1. Composant hydraulique (1 ; 51 ; 101 ; 151 ; 201) comprenant au moins une surface destinée à interagir avec un écoulement d'eau, ladite surface étant obtenue par moulage de matériaux composites, **caractérisé en ce que** ledit composant comprend deux peaux (11, 12 ; 61, 62 111, 112 ; 161, 162 ; 211, 212) constituant respectivement l'intrados et l'extrados dudit composant, réalisées par moulage de matériaux composites et définissant entre elles un volume interne (V) dans lequel sont disposées des nervures de rigidification dont certaines au moins relient lesdites deux peaux.

2. Composant selon la revendication 1, **caractérisé en ce que** ledit volume interne (V) est rempli de mousse synthétique (69) et/ou d'une structure en nids d'abeilles (119) entre lesdites nervures (13 ; 63 ; 113 ; 163 ; 213).

3. Composant selon l'une des revendications précédentes, **caractérisé en ce que** l'une au moins (11 ; 61 ; 111) desdites peaux est revêtue localement d'une protection (14 ; 70 ; 120) contre l'usure ou les chocs.

4. Composant selon la revendication 3, **caractérisé en ce que** ladite protection est formée par au moins un insert métallique (14) intégré dans ou apposé sur ladite peau (11).

5. Composant selon la revendication 3, **caractérisé en ce que** ladite protection est formée par un dépôt électrolytique (70 ; 120) à base de métal, ladite peau (61 ; 111) étant formée, dans la zone de ce dépôt, à partir d'un tissu ou d'un mat dont certains fils ou fibres sont chargés en métal ou métalliques.

6. Composant selon l'une des revendications précédentes, **caractérisé en ce que** certaines au moins desdites nervures (63 ; 113 ; 163 ; 213) sont monobloc avec l'une desdites peaux.

7. Composant selon l'une des revendications précédentes, **caractérisé en ce qu'**il comprend essentiellement une structure (11-13 ; 61-63 ; 111-113 ; 161-163) en matériau composite incluant au moins lesdites deux peaux.

8. Composant selon l'une des revendications 1 à 6, **caractérisé en ce qu'**il comprend une structure métallique (202i) sur laquelle est rapportée une structure en matériau composite (211-213) incluant au moins lesdites deux peaux (211, 212).

9. Auget (1 ; 51 ; 101) de roue de turbine de type Pelton ledit auget formant un composant selon l'une des revendications précédentes, **caractérisé en ce que** lesdites peaux (11, 12) définissent entre elles un volume de réception d'une saillie (21) d'une jante (2) de ladite turbine.

10. Turbine Pelton incluant des augets selon la revendication 9, **caractérisée en ce que** lesdites saillies (21) de ladite jante ont des faces (23-26) globalement parallèles deux à deux.

11. Turbine Pelton selon la revendication 10, **caractérisée en ce qu'**il est prévu un intervalle (V') entre une surface (26) d'une saillie (21) et une surface en regard (12d) d'une (12) desdites peaux (11, 12), cet intervalle étant soit comblé par un matériau de remplissage (18), notamment une mousse synthétique ou une structure en nid d'abeilles, soit laissé vide.

12. Pale (151) de turbine de type Kaplan ladite pale formant un composant selon l'une des revendications 1 à 8, ladite pale comprenant un plateau (152) de raccordement sur un moyeu et un voile (153), **caractérisée en ce que** lesdites nervures de rigidification (163) comprennent au moins une nervure (163b) globalement circonférentielle par rapport à l'axe de rotation dudit moyeu et au moins une nervure radiale (163a) par rapport audit axe.

13. Pale (201) de turbine de type Kaplan ladite pale formant un composant selon l'une des revendications 1 à 8, ladite pale comprenant un plateau (202) de raccordement sur un moyeu et un voile (203), **caractérisée en ce que** ledit voile a une âme métallique (202i) à travers laquelle s'étend au moins une nervure de rigidification (213)..

14. Pale selon l'une des revendications 12 ou 13, **caractérisée en ce qu'**elle comprend des moyens (171, 222) d'immobilisation desdites peaux (161, 162 ; 211, 212) par rapport audit plateau (152 ; 202) ou à un tourillon appartenant audit plateau.

15. Pale selon la revendication 14, **caractérisée en ce que** lesdits moyens comprennent une frette (171) disposée autour dudit plateau (152) et desdites peaux (161, 162).

16. Pale selon la revendication 14, **caractérisée en ce que** lesdits moyens comprennent un organe (222) de blocage de bords (211h, 212h) desdites peaux (211, 212) dans une position où ils coiffent une collerette (202h) dudit plateau (202).

17. Procédé de fabrication d'un composant hydraulique au cours duquel une partie au moins dudit composant est réalisée en matériaux composites, **caractérisé en ce qu'**il comprend les étapes consistant à :
- déterminer par le calcul la géométrie et la composition de l'intrados et de l'extrados dudit composant ainsi que celle de nervures de rigidification ;
- mouler une peau (11; 61 ; 111 ; 161 ; 211) destinée à former l'intrados dudit composant ;
- mouler une peau (12 ; 62 ; 112 ; 162 ; 212) destinée à former l'extrados dudit composant ;
- mouler au moins une nervure (13 ; 63 ; 113 ; 163 ; 213) de rigidification dudit composant, éventuellement en même temps que le moulage de l'une desdites peaux et
- assembler ledit composant en disposant ladite nervure dans un volume interne (V) dudit composant défini entre lesdites peaux.

18. Procédé selon la revendication 17, **caractérisé en ce que** lesdites peaux (11, 12 ; 61, 62 ; 111, 112 ; 161, 162 ; 211 , 212) et ladite nervure (13 ; 63 ; 113 ; 163 ; 213) sont moulées dans une même étape du procédé.

19. Procédé selon l'une des revendications 17 ou 18, **caractérisé en ce qu'**il consiste à garnir ledit volume (V) d'un matériau de remplissage, du genre mousse (69) et/ou structure en nids d'abeilles (119).

20. Procédé selon l'une des revendications 17 à 19, **caractérisé en ce qu'**il consiste à mouler lesdites peaux (11, 12 ; 61, 62 ; 111, 112 ; 161, 162 ; 211, 212) et ladite nervure (13 ; 63 ; 113 ; 163 ; 213) à partir d'un mat de fibres pré-imprégnées de résine.

21. Procédé selon la revendication 20, **caractérisé en ce qu'**il consiste à utiliser, pour les couches externes desdites peaux et dans au moins certaines zones (65 ; 115) dudit composant, des fibres métalliques ou chargées en métal compatibles avec un dépôt électrolytique ultérieur (70 ; 120) dans les zones considérées.

## Claims

1. A hydraulic component (1; 51; 101; 151; 201) comprising at least one surface intended to interact with a flow of water, said surface being obtained by moulding composite materials, **characterised in that** said component comprises two skins (11, 12; 61, 62; 111, 112; 161, 162; 211, 212) constituting respectively the lower surface and the upper surface of said component, which skins are produced by moulding composite materials and define between them an internal volume (V) in which are arranged stiffening ribs, at least some of which connect said two skins.

2. A component according to Claim 1, **characterised in that** said internal volume (V) is filled with synthetic foam (69) and/or a honeycomb structure (119) between said ribs (13; 63; 113; 163; 213).

3. A component according to one of the preceding claims, **characterised in that** one at least (11; 61; 111) of said skins is coated locally with a means of protection (14; 70; 120) against wear or impact.

4. A component according to Claim 3, **characterised in that** said protection means is formed by at least one metal insert (14) integrated in or affixed to said skin (11).

5. A component according to Claim 3, **characterised in that** said protection means is formed by an electrolytic deposit (70; 120) based on metal, said skin (61; 111) being formed, in the zone of this deposit, from a fabric or a mat certain threads or fibres of which are loaded with metal or are metallic.

6. A component according to one of the preceding claims, **characterised in that** some at least of said ribs (63; 113; 163; 213) are integral with one of said skins.

7. A component according to one of the preceding claims, **characterised in that** it essentially comprises a structure (11-13; 61-63; 111-113; 161-163) made of composite material including at least said two skins.

8. A component according to one of Claims 1 to 6, **characterised in that** it comprises a metal structure (202i) to which is attached a structure made of composite material (211-213) including at least said two skins (211, 212).

9. A bucket (1; 51; 101) of a Pelton-type turbine wheel, said bucket forming a component according to one of the preceding claims, **characterised in that** said skins (11, 12) define between them a volume for receiving a protrusion (21) of a rim (2) of said turbine.

10. A Pelton turbine including buckets according to Claim 9, **characterised in that** said protrusions (21) of said rim have faces (23-26) which are overall parallel two by two.

11. A Pelton turbine according to Claim 10, **characterised in that** a gap (V') is provided between a surface (26) of a protrusion (21) and a facing surface (12d) of one (12) of said skins (11, 12), this gap being either filled by a filling material (18), in particular a synthetic foam or a honeycomb structure, or left empty.

12. A blade (151) of a Kaplan-type turbine, said blade forming a component according to one of Claims 1 to 8, said blade comprising a plate (152) for connection to a hub and a web (153), **characterised in that** said stiffening ribs (163) comprise at least one rib (163b) which is overall circumferential relative to the axis of rotation of said hub and at least one rib (163a) which is radial relative to said axis.

13. A blade (201) of a Kaplan-type turbine, said blade forming a component according to one of Claims 1 to 8, said blade comprising a plate (202) for connection to a hub and a web (203), **characterised in that** said web has a metal core (202i) across which extends at least one stiffening rib (213).

14. A blade according to one of Claims 12 or 13, **characterised in that** it comprises means (171, 222) for immobilising said skins (161, 162; 211, 212) relative to said plate (152; 202) or to a journal belonging to said plate.

15. A blade according to Claim 14, **characterised in that** said means comprise a hoop (171) arranged around said plate (152) and said skins (161, 162).

16. A blade according to Claim 14, **characterised in that** said means comprise an element (222) for locking edges (211h, 212h) of said skins (211, 212) in a position where they top a flange (202h) of said plate (202).

17. A process for manufacturing a hydraulic component during which at least part of said component is made from composite materials, **characterised in that** it comprises the steps consisting of:
- determining by calculation the geometry and the composition of the lower surface and the upper surface of said component and also that of stiffening ribs;
- moulding a skin (11; 61; 111; 161; 211) intended to form the lower surface of said component;
- moulding a skin (12; 62; 112; 162; 212) intended to form the upper surface of said component;
- moulding at least one stiffening rib (13; 63; 113; 163; 213) of said component, possibly at the same time as the moulding of one of said skins, and
- assembling said component by arranging said rib in an internal volume (V) of said component defined between said skins.

18. A process according to Claim 17, **characterised in that** said skins (11, 12; 61, 62; 111, 112; 161, 162; 211, 212) and said rib (13; 63; 113; 163; 213) are moulded in one and the same step of the process.

19. A process according to one of Claims 17 or 18, **characterised in that** it consists of filling said volume (V) with a filling material, of the foam (69) and/or honeycomb structure (119) type.

20. A process according to one of Claims 17 to 19, **characterised in that** it consists of moulding said skins (11, 12; 61, 62; 111, 112; 161, 162; 211, 212) and said rib (13; 63; 113; 163; 213) from a mat of fibres pre-impregnated with resin.

21. A process according to Claim 20, **characterised in that** it consists of using, for the outer layers of said skins and in at least some zones (65; 115) of said component, metal fibres or fibres filled with metal which are compatible with later electrolytic deposition (70; 120) in the zones in question.

## Patentansprüche

1. Hydraulische Komponente (1; 51; 101; 151; 201) mindestens eine Fläche umfassend, die vorgesehen ist, um mit einer Wasserströmung zusammenzuwirken, wobei die Fläche durch Formgießen von Verbundmaterial erhalten wird,
**dadurch gekennzeichnet,**
**dass** die Komponente zwei Häute (11, 12; 61, 62, 101, 112; 161, 162; 211, 212) umfasst, die jeweils die Unter- und Oberseite der Komponente bilden und die durch Formgießen von Verbundmaterial hergestellt sind und zwischen sich ein Innenvolumen (V) begrenzen, in dem Versteifungsrippen angeordnet sind, von denen mindestens einige die zwei Häute verbinden.

2. Komponente nach Anspruch 1, **dadurch gekennzeichnet, dass** das Innenvolumen (V) mit synthetischem Schaum (69) und/oder einer Wabenstruktur (119) zwischen den Rippen (13; 63; 113; 163; 213) gefüllt sind.

3. Komponente nach einem der vorhergehenden Ansprüche, **dadurch gekennzeichnet, dass** mindestens eine (11; 61; 111) der Häute lokal mit einem Schutz (14; 79; 120) gegen Abnutzung oder gegen Stöße beschichtet ist.

4. Komponente nach Anspruch 3, **dadurch gekennzeichnet, dass** der Schutz durch mindestens einen metallischen Einsatz (14) gebildet wird, der in die Haut (11) integriert oder auf dieser angebracht ist.

5. Komponente nach Anspruch 3, **dadurch gekennzeichnet, dass** der Schutz durch eine elektrolytische Abscheidung (70; 120) auf Metallbasis gebildet ist, wobei die Haut (61; 111) in der Zone dieser Abscheidung aus einem Gewebe oder einer Matte gebildet wird, von dem bzw. von der gewisse Fäden oder Fasern metallverstärkt oder metallisch sind.

6. Komponente nach einem der vorhergehenden Ansprüche, **dadurch gekennzeichnet, dass** zumindest einige der Rippen (63; 113; 163; 213) einstückig mit einer der Häute verbunden sind.

7. Komponente nach einem der vorhergehenden Ansprüche, **dadurch gekennzeichnet, dass** sie hauptsächlich einen Verbundaufbau (11-13; 31-63; 111-113; 161-163) umfasst, der mindestens die zwei Häute einschließt.

8. Komponente nach einem der Ansprüche 1-6, **dadurch gekennzeichnet, dass** sie eine metallische Struktur (202i) umfasst, auf der ein Verbundaufbau (211-213) aufgebracht ist, der mindestens die zwei Häute (211, 212) einschließt.

9. Schaufel (1; 51; 101) des Rades einer Pelton-Turbine, wobei die Schaufel eine Komponente nach einem der vorhergehenden Ansprüche bildet, **dadurch gekennzeichnet, dass** die Häute (11, 12) zwischen sich ein Aufnahmevolumen für eine Vorsprung eines Radkranzes (2) der Turbine begrenzen.

10. Pelton-Turbine, die Schaufeln nach dem Anspruch 9 einschließt, **dadurch gekennzeichnet, dass** die Vorsprünge (21) des Radkranzes Flächen (23-26) aufweist, die paarweise im Wesentlichen parallel sind.,

11. Turbine nach Anspruch 10, **dadurch gekennzeichnet, dass** ein Abstand (V') zwischen einer Fläche (26) eines Vorsprunges (21) und einer gegenüberliegenden Fläche (12d) einer (12) der Häute (11, 12) vorgesehen ist, wobei dieser Abstand entweder durch ein Füllmaterial (18), insbesondere einen synthetischen Schaum oder einer Wabenstruktur gefüllt ist, oder frei gelassen ist.

12. Blatt (151) einer Kaplan-Turbine, wobei das Blatt ein Plateau (152) zum Anschluss auf einer Nabe und einen Flügel (154) umfasst, **dadurch gekennzeichnet, dass** die Versteifungsrippen (163) mindestens eine Rippe (163b), die im Wesentlichen umfänglich in Bezug auf die Drehachse der Nabe ist und mindestens eine radiale Rippe (163a) in Bezug auf die Achse umfasst.

13. Blatt (201) einer Kaplan-Turbine, wobei das Blatt eine Komponente bildet, nach einem der Ansprüche 1-8, wobei das Blatt ein Plateau (202) für den Anschluss auf einer Nabe und einen Flügel (203) umfasst, **dadurch gekennzeichnet, dass** der Flügel einen metallischen Kern (202i) aufweist, durch den sich mindestens eine Versteifungsrippe (213) erstreckt.

14. Blatt nach einem der Ansprüche 12 oder 13, **dadurch gekennzeichnet, dass** es Mittel (171, 222) zur Festlegung der Häute (161, 162; 211, 212) in Bezug auf das Plateau (152; 202) oder an einem Lagerzapfen, der zu dem Plateau gehört, umfasst.

15. Blatt nach Anspruch 14, **dadurch gekennzeichnet, dass** die Mittel einen Mantelring (171) umfassen, die um das Plateau (152) und die Häute (161, 162) herum angeordnet ist.

16. Blatt nach Anspruch 14, **dadurch gekennzeichnet, dass** die Mittel ein Organ (222) zur Blockierung der Ränder (211h, 212h) der Häute (211, 212) in einer Position umfassen, wo sie einen Kragen (202h) des Plateaus (202) überdecken.

17. Verfahren zur Herstellung einer hydraulischen Komponente, während dessen mindestens ein Teil der Komponente aus Verbundmaterial hergestellt ist, **dadurch gekennzeichnet, dass** es die Schritte umfasst, die bestehen aus:
- Bestimmen der Geometrie und der Zusammensetzung der Unterseite und der Oberseite der Komponente sowie der der Versteifungsrippen durch Berechnung;
- Formen einer Haut (11; 61; 111; 161; 211), die vorgesehen ist, die Unterseite der Komponente zu bilden;
- Formen einer Haut (12; 62; 112; 162; 212), die vorgesehen ist die Oberseite der Komponente zu bilden;
- Formen mindestens einer Versteifungsrippe (13; 63; 113; 163; 213) der Komponente gegebenenfalls zur gleichen Zeit wie das Formen einer der Häute und
- Zusammensetzen der Komponente, in dem die Rippe in ein Innenvolumen (V) der Komponente angeordnet wird, das zwischen den Häuten begrenzt ist.

18. Verfahren nach Anspruch 17, **dadurch gekennzeichnet, dass** die zwei Häute (11, 12; 61, 62; ; 111, 112; 161, 162; 211, 212) und die Rippe (13; 63; 113; 163; 213) in ein und demselben Schritt des Verfahrens geformt werden.

19. Verfahren nach einem der Ansprüche 17 oder 18, **dadurch gekennzeichnet, dass** es darin besteht, das Volumen (V) mit einem Füllmaterial von der Art eines Schaumes (69) und/oder einer Wabenstruktur (119) zu füllen.

20. Verfahren nach einem der Ansprüche 17 bis 19, **dadurch gekennzeichnet, dass** es darin besteht, die Häute (11, 12; 61, 62; 111, 112; 161, 162; 211, 212) und die Rippe (13; 63; 113; 163; 213) aus einer mit Harz vorimprägnierten Fasermatte zu formen.

21. Verfahren nach Anspruch 20, **dadurch gekennzeichnet, dass** es darin besteht, für die Außenschichten der Häute und in mindestens einigen Zonen (65; 115) der Komponente metallische Fasern oder metallverstärkte Fasern zu verwenden, die kompatibel mit einer späteren elektrolytischen Abscheidung (70; 120) in den betrachteten Zonen sind.
